# EUROPEAN PATENT APPLICATION

(11) **EP 4 131 211 A1**
(43) Date of publication of application: **08.02.2023**
(21) Application number: 21774684.1
(22) Date of filing: 14.01.2021
(51) Int. Cl.: G08G 1/0969, G01C 21/36

(54) **INFORMATION PROVIDING DEVICE, INFORMATION PROVIDING METHOD, AND INFORMATION PROVIDING PROGRAM**

(30) Priority: 27.03.2020 JP 2020058576
(71) Applicant: Pioneer Corporation, Tokyo 113-0021 (JP)
(72) Inventor: FUKUI Kotaro, Kawagoe-shi, Saitama 350-8555 (JP); IWATA Masahiro, Kawagoe-shi, Saitama 350-8555 (JP); IINO Shinichiro, Kawagoe-shi, Saitama 350-8555 (JP); IZUMI Shota, Kawagoe-shi, Saitama 350-8555 (JP); ONUMA Yohei, Kawagoe-shi, Saitama 350-8555 (JP)
(74) Representative: Isarpatent
(86) International application number: PCT/JP2021/000995
(87) International publication number: WO 2021/192521

(57) **Abstract**

The objective of the present invention is to provide an information providing device and the like capable of simplifying entry into a road to be entered, even using guidance by voice or the like.

This information providing device is provided with: a route searching unit 1 which acquires both road data 23a and intersection data 23b; and a guidance voice generating unit 2 which, on the basis of the acquired road data 23a and the like, outputs, while moving along a wider road, a simplified guidance voice for moving to a narrower road, in such a way that it is simple to enter the narrower road from the wider road.

## Description

### TECHNICAL FIELD

The present application pertains to the technical field of an information providing device, an information providing method, and an information providing program. More specifically, the present application pertains to the technical field of an information providing device and an information providing method for providing information for guiding a moving body such as a vehicle, and of a program for the information providing device.

### BACKGROUND ART

For a navigation device that guides movement of the moving body, in recent years, research and development on a navigation system utilizing a portable terminal device such as a smartphone have been activated in addition to a conventionally generalized navigation device to be mounted on a moving body.

At this time, guidance using sound including guidance voice is important to a case where the portable terminal device is used, because of the limitation in the size of a display provided in the portable terminal device or the like. As a document disclosing the prior art corresponding to such a background, for example, Patent Document 1 below can be cited. In the prior art disclosed in Patent Document 1, for example, another intersection having a road structure similar to the road structure of a guidance-subject intersection is detected, and this detection is announced as attention information by voice guidance.

### CITATION LIST

### PATENT DOCUMENT

Patent Document 1: JP 5091603 B2

### SUMMARY OF THE INVENTION

### PROBLEM TO BE SOLVED BY THE INVENTION

Even with the prior art described in Patent Document 1, however, in a case where, for example, the moving body is a vehicle or the like, a main road is present ahead of an entrance to a road to be approached, and the width of the road to be approached is narrower than the width of the road on which the vehicle is currently moving, there is the problem that the vehicle may pass by the entrance to the road to be approached.

Therefore, the present application has been made in view of the above problem and an example of the problem is to provide an information providing device and an information providing method capable of facilitating approaching the road to be approached even with voice guidance or the like, and a program for the information providing device.

### MEANS FOR SOLVING THE PROBLEM

In order to solve the above-mentioned problem, the invention described in claim 1 is an information providing device comprising: an acquisition means that acquires first aspect information indicating an aspect of a first movement path and second aspect information indicating an aspect of a second movement path; and an output means that outputs guidance information for causing movement on the first movement path on the basis of the acquired first aspect information and the second aspect information so as to facilitate approaching the second movement path from the first movement path during movement on the first movement path, by sound.

In order to solve the above-mentioned problem, the invention described in claim 9 is an information providing method executed in an information providing device including an acquisition means and an output means, the information providing method comprising: an acquisition step of acquiring, by the acquisition means, first aspect information indicating an aspect of a first movement path and second aspect information indicating an aspect of a second movement path; and an output step of outputting, by the output means, guidance information for causing movement on the first movement path on the basis of the acquired first aspect information and second aspect information so as to facilitate approaching the second movement path from the first movement path during movement on the first movement path, by sound.

In order to solve the above-mentioned problem, the invention described in claim 10 causes a computer to function as: an acquisition means that acquires first aspect information indicating an aspect of a first movement path and second aspect information indicating an aspect of a second movement path; and an output means that outputs guidance information for causing movement on the first movement path on the basis of the acquired first aspect information and the second aspect information so as to facilitate approaching the second movement path from the first movement path during movement on the first movement path, by sound.

### BRIEF DESCRIPTION OF THE DRAWINGS

Fig. 1 is a block figure illustrating a schematic configuration of an information providing device according to an embodiment.
Fig. 2 is a block figure illustrating a schematic configuration of a navigation system according to an example.
Fig. 3 is a block figure illustrating a schematic configuration of a terminal device or the like according to the example, Fig. 3(a) is a block figure illustrating a schematic configuration of the terminal device, Fig. 3(b) is a block figure illustrating a schematic configuration of a server according to the example, and Fig. 3(c) is a figure illustrating contents of road data or the like of the example.
Fig. 4 is a flowchart illustrating navigation processing according to the example.
Fig. 5 is a conceptual figure explaining the navigation processing according to the example.

### EMBODIMENT FOR CARRYING OUT THE INVENTION

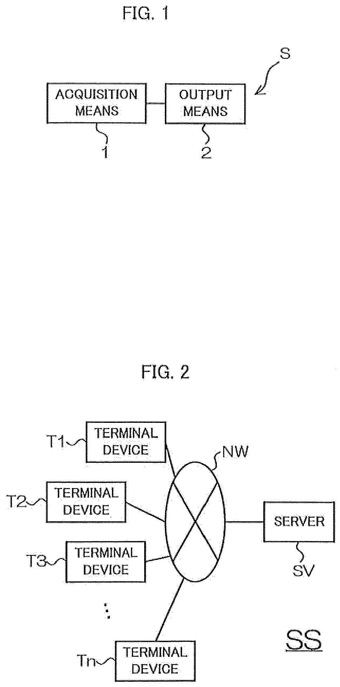

Next, an embodiment of the present application will be described with reference to Fig. 1. Note that Fig. 1 is a block figure illustrating a schematic configuration of an information providing device according to the embodiment.

As illustrated in Fig. 1, an information providing device S according to the embodiment comprises: an acquisition means 1; and an output means 2.

In this configuration, the acquisition means 1 acquires first aspect information indicating an aspect of a first movement path and second aspect information indicating an aspect of a second movement path.

Then, the output means 2 outputs guidance information for causing movement on the first movement path on the basis of the first aspect information and the second aspect information acquired by the acquisition means 1 so as to facilitate approaching the second movement path from the first movement path during movement on the first movement path, by sound.

As described above, with the operation of the information providing device S according to the embodiment, guidance information for causing movement on the first movement path so as to facilitate approaching the second movement path from the first movement path is output on the basis of the first aspect information and the second aspect information by sound during movement on the first movement path. Therefore, approaching the second movement path can be facilitated even by sound guidance.

### EXEMPLARY EMBODIMENTS

Next, specific examples corresponding to the above-described embodiment will be described with reference to Figs. 2 to 5. Note that the example described below is an example in a case where the present application is applied to route guidance using sound (voice) in a navigation system including a terminal device and a server connected to be able to exchange data with each other via a network such as the Internet.

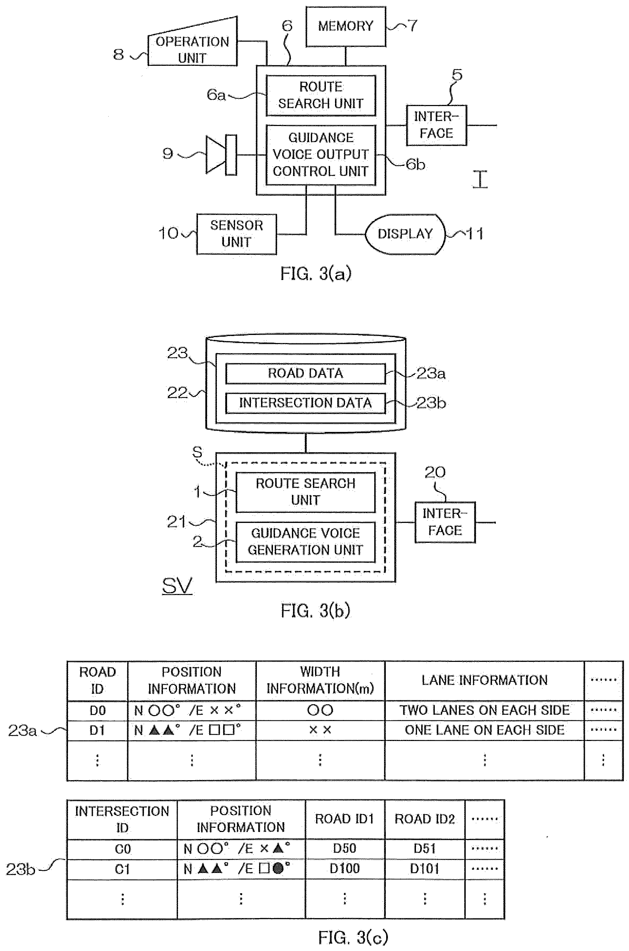

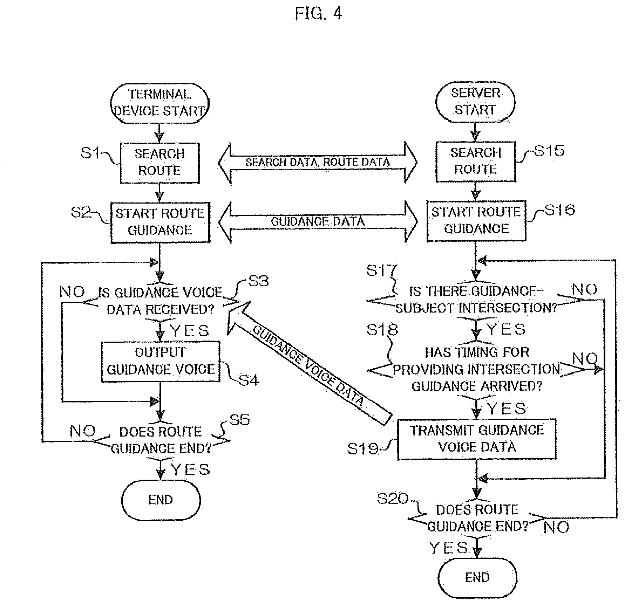

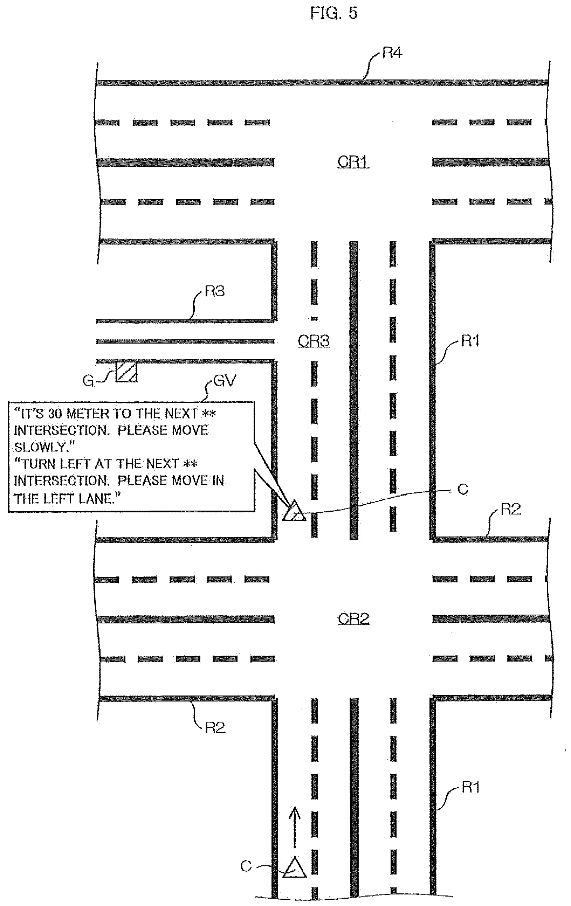

In addition, Fig. 2 is a block figure illustrating a schematic configuration of a navigation system according to the example, Fig. 3 is a block figure illustrating a schematic configuration of a terminal device or the like according to the example, Fig. 4 is a flowchart illustrating navigation processing according to the example, and Fig. 5 is a conceptual figure explaining the navigation processing according to the example. At this time, in Fig. 3, for some of the constituent members of the example corresponding to the respective constituent members in the information providing device S according to the embodiment illustrated in Fig. 1, the same member numbers as those of the respective constituent members in the information providing device S are used.

As illustrated in Fig. 2, a navigation system SS of the example comprises: one or a plurality of a terminal device T1, a terminal device T2, a terminal device T3,..., and a terminal device Tn (n is a natural number) each operated in a vehicle that is an example of a moving body by an occupant of the vehicle (more specifically, a driver or a passenger of the moving body); a server SV; and a network NW such as the Internet that connects the terminal device T1, the terminal device T2, the terminal device T3,..., and the terminal device Tn to the server SV so as to enable exchanging data. Note that, in the following description, the terminal device T1 to the terminal device Tn will be collectively referred to as a "terminal device T" when a configuration or the like common to them is described. At this time, the terminal device T is specifically implemented as, for example, what is called a smartphone or a tablet-type terminal device. In addition, in the following description, an example will be described for a case where an occupant who uses the terminal device T rides on the vehicle.

In this configuration, each terminal device T individually exchanges various data with the server SV via the network NW, and provides guidance of movement to the occupant who uses each of the terminal device T. The data exchanged at this time includes search data for searching for a route on which the vehicle have to move and guidance data after the movement along the searched route is started. Furthermore, for example, because of the limitation in the size of the display for indication provided in the terminal device T or the limitation in the processing load, or in order to prevent a screen from being gazed, the guidance of movement to the occupant is mainly performed using voice or sound in the navigation system SS. Therefore, the guidance data transmitted from the server SV to each terminal device T includes voice data for guidance by the voice or sound. Note that, in the following description, the voice data for guidance is simply referred to as "guidance voice data".

Next, the configuration and operation of each terminal device T and the server SV will be described with reference to Fig. 3. First, as illustrated in Fig. 3(a), each of the terminal devices T of the example comprises: an interface 5; a processing unit 6 including a CPU, a random access memory (RAM), a read only memory (ROM), and the like; a memory 7 including a volatile region and a nonvolatile region; an operation unit 8 including a touch panel, an operation button, and the like; a speaker 9; a sensor unit 10 including a global positioning system (GPS) sensor and/or a self-contained sensor, and the like; and a display 11 comprising a liquid crystal, an organic electro luminescence (EL) display, and the like. In addition, the processing unit 6 comprises: a route search unit 6a; and a guidance voice output control unit 6b. At this time, each of the route search unit 6a and the guidance voice output control unit 6b may be implemented with hardware logic circuitry including the above-described CPU or the like constituting the processing unit 6, or may be implemented with software by the CPU or the like reading out and executing a program corresponding to a flowchart illustrating processing on the terminal device T in navigation processing of an example described later.

In the aforementioned configuration, the interface 5 controls data exchange with the server SV via the network NW under the control of the processing unit 6. Meanwhile, the sensor unit 10 generates sensor data indicating the current position, the moving speed, the moving direction, and the like of the terminal device T (in other words, the current position, the moving speed, the moving direction, and the like of the occupant who operates the terminal device T or of the vehicle on which the occupant rides) using the GPS sensor and/or the autonomous sensor, and outputs the sensor data to the processing unit 6. Under the control of the processing unit 6, the route search unit 6a transmits the sensor data and the destination data (that is, the destination data indicating the destination to which the vehicle on which the occupant operating the terminal device T rides have to move) input from the operation unit 8 to the server SV via the interface 5 and the network NW as search data. Thereafter, the route search unit 6a acquires route data indicating a search result of a route from the current position indicated by the sensor data to the destination indicated by the destination data via the network NW and the interface 5.

Thereafter, the processing unit 6 guides the movement of the vehicle along the searched route while exchanging the guidance data (including the sensor data at that time) with the server SV using the acquired route data. At this time, the guidance voice output control unit 6b outputs (sounds) the voice for guidance corresponding to the guidance voice data included in the guidance data acquired from the server SV via the network NW and the interface 5 to the occupant through the speaker 9.

In parallel with this, in a case where an input operation of data necessary for guiding a vehicle including the destination is performed in the operation unit 8, the operation unit 8 generates an operation signal (including the destination data) corresponding to the input operation and transmits the operation signal to the processing unit 6. As a result, the processing unit 6 executes processing on the terminal device T in the navigation processing according to the example while controlling the route search unit 6a and the guidance voice output control unit 6b. At this time, the processing unit 6 executes the processing while storing data necessary for the processing in the memory 7 in a temporal or nonvolatile manner. In addition, a guidance image or the like as an execution result of the processing is displayed on the display 11.

Meanwhile, as illustrated in Fig. 3(b), the server SV according to the example comprises: an interface 20; a processing unit 21 including a CPU, a RAM, a ROM, and the like; and a recording unit 22 including a hard disc drive (HDD), a solid state drive (SSD), or the like. In addition, the processing unit 21 includes: a route setting unit 1; and a guidance voice generation unit 2. At this time, each of the route setting unit 1 and the guidance voice generation unit 2 may be implemented with hardware logic circuitry including the above-described CPU or the like constituting the processing unit 21, or may be implemented with software by the CPU or the like reading out and executing a program corresponding to a flowchart illustrating processing on the server SV in the navigation processing of the example described later. Then, a route search unit 1 corresponds to an example of the acquisition means 1 of the embodiment, and the guidance voice generation unit 2 corresponds to an example of the output means 2 of the embodiment. In addition, as indicated by a broken line in Fig. 3(b), the route search unit 1 and the guidance voice generation unit 2 constitute an example of the information providing device S according to the embodiment.

In the aforementioned configuration, navigation data 23 such as map data, the guidance voice data, and the like necessary for guiding the movement of each vehicle on which the occupant who uses each terminal device T connected to the server SV via the network NW rides is recorded in the recording unit 22 in a nonvolatile manner. Then, as illustrated in Fig. 3(b), the map data of the navigation data 23 includes road data 23a and intersection data 23b used for route search and route guidance.

At this time, as illustrated in the upper part of Fig. 3(c) for example, the road data 23a is data in which position information indicating a position by latitude data and longitude data, width information indicating a road width (width), for example, in meters, lane information indicating the number of lanes constituting a road, and the like are recorded for each road included in the map data, in association with a road ID for identifying the road from other roads.

Meanwhile, as illustrated in the lower part of Fig. 3(c) for example, the intersection data 23b is data in which position information indicating a position by latitude data and longitude data, a road ID indicating each road intersecting at an intersection, and the like are recorded for each intersection included in the map data, in association with an intersection ID for identifying the intersection from other intersections.

On the other hand, the interface 20 controls data exchange with each terminal device T via the network NW under the control of the processing unit 21. In addition, under the control of the processing unit 21, using the navigation data 23, the route setting unit 1 searches for the route to the destination indicated by the destination data based on the destination data and the sensor data acquired from any of the terminal devices T, and transmits the route data indicating the search result to the terminal device T that has transmitted the destination data and the sensor data. As a result, the terminal device T performs guidance of a route based on the route data.

Then, during the guidance, the guidance voice generation unit 2 generates the guidance voice data in accordance with the guide timing on the route, and transmits the guidance voice data to the terminal device T used by the occupant of the vehicle that is the target of guidance via the interface 20 and the network NW. As a result, the voice for guidance corresponding to the guidance voice data is output (sounded) to the occupant through the speaker 9 of a terminal measure T.

Next, navigation processing according to the example executed in the navigation system according to the example having the above-described configuration and function will be specifically described with reference to Figs. 3 to 5.

The navigation processing according to the example is started when, for example, on the operation unit 8 of the terminal device T of the example used by the occupant who rides on a vehicle which is the target of movement guidance (hereinafter, simply referred to as a "target vehicle"), a guidance instruction operation or the like to guide the movement of the target vehicle along the route is executed. Note that, in the following description, the terminal device T will be appropriately referred to as a "target terminal device T". Then, as illustrated in the corresponding flowchart in Fig. 4, when the guidance instruction operation is performed on the operation unit 8 of the target terminal device T, the route search unit 6a in the processing unit 6 of the terminal device T exchanges the route data and the search data that includes the destination data with the route search unit 1 of the server SV and searches for a route on which the target vehicle have to move (Step S1). At this time, the route search unit 1 of the server SV always waits for transmission of the search data from any of the terminal devices T connected to the server SV via the network NW at that time. Then, in a case where the search data is transmitted from the target terminal device T, the route search unit 1 performs a route search based on the destination data or the like included in the search data and transmits the route data as the search result to the route search unit 6a of the target terminal device T via the network NW (Step S15).

Thereafter, when guidance of movement along the route is started by, for example, an operation to start movement on the operation unit 8 of the target terminal device T, the processing unit 6 of the target terminal device T and the processing unit 21 of the server SV start guidance along the route searched at Step S1 and Step S15 while exchanging the guidance data including the sensor data at that time with each other via the network NW (Step S2, Step S16).

Meanwhile, during the guidance of the route started in Step S15 (that is, while the vehicle on which the occupant using the target terminal device T rides is moving), the guidance voice generation unit 2 of the server SV monitors whether there is a guidance-subject intersection on the set route (Step S17). In the monitoring at Step S17, in a case where there is no guidance-subject intersection (Step S17: NO), the processing unit 21 proceeds to Step S20 described later. By contrast, in the monitoring at Step S 17, in a case where there is a guidance-subject intersection (Step S17: YES), next, the guidance voice generation unit 2 determines whether the timing at which guidance on the guidance-subject intersection is provided by voice has arrived, on the basis of the sensor data (in particular, data indicating the current position of the target terminal device T) included in the guidance data (Step S18). Here, examples of the timing of the voice guidance at Step S18 include a timing after passing (or immediately after passing) through an intersection one before the guidance-subject intersection detected by the monitoring at Step S17 on the route. In a case where it is determined at Step 18 that the timing of voice guidance has not arrived (Step S18: NO), the processing unit 21 proceeds to Step S20 described later.

By contrast, in the determination at Step S18, in a case where the timing at which guidance on a guidance-subject intersection (refer to Step S17: YES) is provided by voice has arrived (Step S18: YES), the guidance voice generation unit 2 generates guidance voice data having content to be provided as guidance (for example, "Turn left at the next ** intersection" or the like) for the intersection, and transmits the generated guidance voice data to the target terminal device T via the network NW (Step S19). At this time, the guidance voice generation unit 2 refers to the road data 23a and the intersection data 23b, and in a case where the width of the road to be approached through the intersection detected by the monitoring at Step S17 is narrower than the width of the road on which the vehicle moves before approaching the intersection, the guidance voice generation unit 2 generates facilitation-guidance voice data according to the example for facilitating approaching the road to be approached through the intersection, and transmits the facilitation-guidance voice data to the target terminal device T via the network NW in addition to the guidance voice data (Step S19). Here, examples of the facilitation-guidance voice data corresponding to the above-described facilitation-guidance voice include, for example, "Please proceed slowly to the next ** intersection." and "Turn left (right) at the next ** intersection. Please proceed in the left (right) lane." Note that the facilitation-guidance voice data corresponding to either one or both of the facilitation-guidance voices may be transmitted to the target terminal device T. Note that, in Fig. 4, the case where only the guidance voice data is transmitted at Step S19 and the case where the facilitation-guidance voice data is transmitted together are collectively referred to as "guidance voice data", "guidance voice data transmission (Step S 19)", and "guidance voice data reception (Step S3)".

Thereafter, the processing unit 21 determines whether to end the route guidance as the navigation processing according to the example because the target vehicle has reached its destination or other reasons (Step S20). In a case where the determination at Step S20 concludes that the route guidance does not end (Step S20: NO), the processing unit 21 returns to Step S17 described above and continues to provide the route guidance. By contrast, in a case where the determination at Step S20 concludes that the route guidance ends (Step S20: YES), the processing unit 21 merely ends the route guidance.

Meanwhile, after the guidance is started at Step 2, the guidance voice output control unit 6b of the target terminal device T waits for transmission of the guidance voice data (or guidance voice data and facilitation-guidance voice data, hereinafter referred to as "guidance voice data or the like") from the server SV (Step S3). When the guidance voice data or the like is not transmitted during the standby at Step S3 (Step S3: NO), the processing unit 6 of the target terminal device T proceeds to Step S5 described later.

On the other hand, in a case where the guidance voice data or the like are received from the server SV in the standby at Step S3 (Step S3: YES), the guidance voice output control unit 6b of the target terminal device T outputs (sounds) the guidance voice (or the guidance voice and the facilitation-guidance voice) corresponding to the received guidance voice data or the like through the speaker 9 (Step S4). Thereafter, the processing unit 6 of the target terminal device T determines whether to end the route guidance as the navigation processing according to the example for the same reason as in Step S20 described above, for example (Step S5). In a case where the determination at Step S5 concludes that the route guidance does not end (Step S5: NO), the processing unit 6 returns to Step S3 described above and continues to provide the route guidance. By contrast, in a case where the determination at Step S5 concludes that the route guidance ends (Step S5: NO), the processing unit 6 merely ends the route guidance.

Here, outputting (sounding) of the guidance voice or the like in a case where the navigation processing according to the example is executed in the server SV and the target terminal device T will be specifically described with reference to Fig. 5. Note that Fig. 5 is a conceptual figure explaining the navigation processing according to the example.

That is, in Fig. 5, a road R1 having two lanes on each side intersects a main road R4 having two lanes on each side in a T shape at an intersection CR1. Meanwhile, the road R1 intersects with a road R2 having two lanes on each side at an intersection CR2 before reaching the intersection CR1, and a target vehicle C is necessary to turn left from the road R1 at an intersection CR3 to a road R3 having one lane on each side that reaches a destination G of the target vehicle C. Here, regarding the width of the road, it is assumed that the width of the road R1 is wider than the width of the road R3. Then, information indicating the widths is recorded in the server SV in advance as the road data 23a, and information indicating a road (road R1 or the like) intersecting at each intersection (intersection CR or the like) is recorded in the server SV in advance as the intersection data 23b.

In the case described above as illustrated in Fig. 5, when the navigation processing according to the example is executed, a guidance voice GV including the facilitation-guidance voice illustrated in Fig. 5 is output (sounded) from the speaker 9 of the target terminal device T (refer to Step S19 and Step S4 in Fig. 4) at the timing when the target vehicle C in moving by following the route guidance to the destination G (refer to Step S2 and Step S16 in Fig. 4) has moved from the position of a white triangle before the intersection CR2 to the position of a hatched triangle after passing through the intersection CR2 one before the intersection CR3 at which the target vehicle C has to turn left (refer to Step S18: YES in Fig 4). As a result, even in a case of approaching the narrow road R3 from the wide road R1, the occupant using the target terminal device T can reliably approach the road R3 without missing the entrance to the road R3.

As described above, with the navigation processing according to the example, the guidance voice GV including the facilitation-guidance voice for movement that facilitates approaching a narrow road from a wide road is output (sounded) by sound while moving on the wide road on the basis of the road data 23a and the intersection data 23b (refer to Step S19 and Step S4 in Fig. 4), and therefore approaching the narrow road can be facilitated even by sound guidance.

In addition, information indicating the width of each road is recorded as the road data 23a, and the facilitation-guidance voice data is generated using these data, and therefore it is possible to facilitate approaching a road having a narrow width, in accordance with the width of each road even by sound guidance.

Furthermore, as illustrated in Fig. 5, the facilitation-guidance voice is output (sounded) at the time of guidance from a wide road to a narrow road, and therefore it is possible to facilitate approaching the narrow road from the wide road even by sound guidance.

Furthermore, in a case where the facilitation-guidance voice to reduce the speed before reaching the position of the entrance to the narrow road is output (sounded), it is possible to reliably facilitate approaching the narrow road even by sound guidance.

In addition, even in a case where the facilitation-guidance voice to make lane change to the lane that is the target of lane change when approaching a narrow road is output (sounded), it is possible to reliably facilitate approaching the narrow road.

Furthermore, in a case where the guidance voice GV including the facilitation-guidance voice is output (sounded) after passing through the position of the intersection CR2 that does not reach the position of the entrance to the narrow road (for example, the intersection CR3 illustrated in Fig. 5), it is possible to reliably facilitate approaching the narrow road even by sound guidance.

Furthermore, in the navigation processing according to the above-described example, the configuration is such that the facilitation-guidance voice is output (sounded) in accordance with the width of the road, but in addition to this, the configuration may be such that the facilitation-guidance voice according to the example is output (sounded) in accordance with the quality of visibility when the entrance to the road to be approached is viewed from the road on which the vehicle is currently moving. Here, in this quality of visibility, the visibility is assumed to be poor if, for example, an entrance at a certain intersection to a road to be approached through the intersection is difficult to be visually recognized because the entrance is in the shadow of vegetation or a large building beside the intersection. In this case, it is preferable to record in advance, as the intersection data 23b according to the example, the quality of visibility of a road viewed from another road intersecting at the intersection, and to output (sound) the facilitation-guidance voice according to the example in a case where the route for which guidance needs to be made includes movement to approach a road with poor visibility at the intersection. In addition, in a case where the target vehicle comprises a sensor (for example, a sensor such as a light detection and ranging (LiDAR) system) that three-dimensionally detects the surrounding situation of the target vehicle, the server SV may determine whether it is an intersection for which the facilitation-guidance voice according to the example needs to be output (sounded) on the basis of the detection result by the sensor.

Even in a case where it is determined whether the facilitation-guidance voice is output (sounded) on the basis of the quality of visibility of an entrance as described above, it is possible to facilitate approaching a road scheduled to be approached by sound guidance. Furthermore, with the configuration in which the facilitation-guidance voice is output (sounded) when the quality of visibility of an entrance is poor, it is possible to facilitate approaching the road having the entrance with poor visibility by sound guidance.

Furthermore, in the navigation processing according to the above-described example, the processing unit 21 of the server SV monitors a guidance-subject intersection (refer to Step S17 in Fig. 4) and determines arrival of guidance timing for the guidance-subject intersection (refer to Step S18 in Fig. 4). However, beside this, the target terminal device T may be configured to monitor a guidance-subject intersection and determine arrival of guidance timing. In this case, it is preferable to cause the external server to execute only the search for the route on which the target vehicle moves. Also in this case, similarly to the navigation processing according to the example, it is possible to facilitate approaching a narrow road or a road having an entrance with poor visibility even by sound guidance.

Furthermore, in place of or in combination with the width information, the facilitation-guidance voice may be output (sounded) using a speed limit set for the road (alternatively, the average speed of the road obtained from so-called probe information). More specifically, in a case of approaching a road with a low speed limit from a road with a high speed limit, there is a high possibility that the vehicle passes through the entrance. Therefore, it is preferable to output (sound) a facilitation-guidance voice at a position before the entrance to reduce the speed, for example.

In addition, when programs corresponding to the respective flowcharts illustrated in Fig. 4 have been recorded in a recording medium such as an optical disk or hard disk, or have been obtained via a network such as the Internet, and are loaded to and executed on a general-purpose microcomputer or the like, it is also possible to cause the microcomputer or the like to function as the processing unit 6 or the processing unit 21 according to the example.

### EXPLANATION OF REFERENCE NUMERALS

- 1: Acquisition means (route search unit)
- 2: Output means (guidance voice generation unit)
- 6, 21: Processing unit
- 6b: Guidance voice output control unit
- 9: Speaker
- 23a: Road data
- 23b: Intersection data
- S: Information providing device
- T, T1, T2, T3, Tn: Terminal device
- SV: Server
- GV: Guidance voice

## Claims

1. An information providing device, comprising:
an acquisition means that acquires first aspect information indicating an aspect of a first movement path and second aspect information indicating an aspect of a second movement path; and
an output means that outputs guidance information for causing movement on the first movement path on the basis of the acquired first aspect information and the second aspect information so as to facilitate approaching the second movement path from the first movement path during movement on the first movement path, by sound.

2. The information providing device according to claim 1, wherein
the first aspect information is information indicating a width of the first movement path, and
the second aspect information is information indicating a width of the second movement path.

3. The information providing device according to claim 2, wherein
the output means outputs the guidance information when the width of the second movement path is narrower than the width of the first movement path.

4. The information providing device according to claim 1, wherein
the first aspect information and the second aspect information are information indicating visibility of the second movement path when viewed from the first movement path.

5. The information providing device according to claim 4, wherein
the output means outputs the guidance information when an entrance from the first movement path to the second movement path is not visually recognized from a position that is on the first movement path and that does not reach a position of the entrance.

6. The information providing device according to any one of claims 1 to 5, wherein
the guidance information is guidance information to reduce speed before reaching a position of an entrance from the first movement path to the second movement path.

7. The information providing device according to any one of claims 1 to 6, wherein
the first movement path is a road including a plurality of lanes, and
the guidance information is guidance information for making lane change to the lane that is a target of lane change when approaching the second movement path from the first movement path.

8. The information providing device according to any one of claims 1 to 7, wherein
the output means outputs the guidance information after passing a position that does not reach a position of an entrance to the second movement path and at which a moving speed is to be reduced.

9. An information providing method executed in an information providing device including an acquisition means and an output means, the information providing method comprising:
an acquisition step of acquiring, by the acquisition means, first aspect information indicating an aspect of a first movement path and second aspect information indicating an aspect of a second movement path; and
an output step of outputting, by the output means, guidance information for causing movement on the first movement path on the basis of the acquired first aspect information and second aspect information so as to facilitate approaching the second movement path from the first movement path during movement on the first movement path, by sound.

10. An information providing program, causing a computer to function as:
an acquisition means that acquires first aspect information indicating an aspect of a first movement path and second aspect information indicating an aspect of a second movement path; and
an output means that outputs guidance information for causing movement on the first movement path on the basis of the acquired first aspect information and the second aspect information so as to facilitate approaching the second movement path from the first movement path during movement on the first movement path, by sound.
